# EUROPEAN PATENT SPECIFICATION

(11) **EP 2 886 024 B1**
(45) Date of publication and mention of the grant of the patent: **20.02.2019**
(21) Application number: 13197972.6
(22) Date of filing: 18.12.2013
(51) Int. Cl.: A47J 37/06, F24C 15/32, G01F 23/24

(54) **Improved detection assembly for electric appliances**
Verbesserte Detektionsanordnung für elektrische Geräte
Ensemble de détection amélioré pour appareils électriques

(43) Date of publication of application: 24.06.2015
(73) Proprietor: ELECTROLUX PROFESSIONAL S.p.A., 33170 Pordenone (IT)
(72) Inventor: Turrin, Daniele, I-33170 PORDENONE (IT); Piccolo, Andrea, I-33170 PORDENONE (IT); Barchitta, Marco, I-33170 PORDENONE (IT); Marchesin, Claudio, I-33170 PORDENONE (IT); Foda, Alberto, I-33170 PORDENONE (IT); Furlanetto, Riccardo, I-33170 PORDENONE (IT); Simonato, Michele, I-33170 PORDENONE (IT); Turra, Luca, I-33170 PORDENONE (IT); Cescot, Paolo, I-33170 PORDENONE (IT)
(74) Representative: Electrolux Group Patents

(56) References cited:
- EP-A2- 0 399 824
- EP-A2- 1 837 600
- EP-A2- 2 518 413
- DE-A1-102005 055 773
- US-A1- 2007 234 796
- "LOW COOLANT SENSING PROBE WITH CONNECTOR CORROSION PREVENTION", RESEARCH DISCLOSURE, MASON PUBLICATIONS, HAMPSHIRE, GB, no. 288, 1 April 1988 (1988-04-01), page 243, XP000029707, ISSN: 0374-4353

## Description

### Field of the invention

The present invention generally relates to household or professional cooking ovens provided with steam generation systems for allowing food cooking by steaming. Even more particularly, the solution relates to an improved detection assembly for use in such steam generator systems.

### Background of the invention

A widely used class of household or professional cooking ovens are adapted to provide food cooking by steam (typically, in addition to other traditional cooking techniques).

In order to achieve that, such cooking ovens typically comprise steam generation systems (hereinafter, referred to as boilers) for generating steam from water.

A typical boiler comprises a (generally, metal) vessel adapted to be selectively supplied with water (*e.g.,* automatically from a water mains, as usual in professional cooking ovens, or manually by a user, as usual in household cooking ovens) and, within said vessel, a heating element (*e.g.,* an immersion resistor heater), adapted to be submerged (*i.e.,* totally immersed) by water and to generate steam by water heating.

As known, operation of the heating element when not submerged by water should be avoided. Otherwise, the resulting over-heating of the boiler would pose reliability issues (*e.g.,* due to degradation of over-temperature sensitive components, such as seals) and food cooking quality issues (*e.g.,* due to the fact that foul-smelling fumes resulting from components degradation could reach the cooking chamber where food under cooking is placed).

In order to avoid such occurrence, a water-level detection assembly is typically provided for detecting when the water level within the vessel, due to steam generation and leaving, falls below a predefined threshold level indicating that the heating element is not submerged by water any longer.

According to a common implementation, the detection assembly comprises a detection element (typically, an electrically-conductive rod) that, through a vessel opening, is inserted into the boiler, and an electrically-conductive plug (mechanically supporting, and electrically insulated from, the rod) for mechanical coupling of the detection assembly to the vessel and covering of the vessel opening (*e.g.,* by screwing the plug in a threaded coupling element of the vessel opening).

When the water level within the vessel is to be detected, an electric potential difference is provided across the rod and the plug (and, hence, across the rod and the vessel as well, being the latter in contact with the plug). When the water level inside the vessel is above the threshold level, the water electrically connects the rod to the vessel (and hence to the plug), and thus the rod and the conductive plug are essentially at the same electric potential. This indicates that the heating element is submerged by water. On the contrary, when the water level inside the vessel is below the threshold level, no electrical connection arises between the rod and the vessel, thereby the electric potential difference therebetween is maintained. This indicates that the heating element is not submerged by water.

DE200510055773 discloses a device having a cooking space, a controller, and an absorber surface that is arranged in the steam cooking device for condensation of steam. The absorber surface runs substantially close to a surface of a cooking space wall that faces the cooking space. The absorber surface stands in heat transfer connection with a cool surface that is arranged outside of the cooking space. A steam volume present in the cooking space is determined from a measuring signal in an evaluation unit of the controller by an algorithm or a truth table stored in an accumulator.

US2007234796 discloses a liquid level detector for conductive liquids for vertical installation in a tank, the detector having a probe positioned within a sheath and insulated therefrom by a seal so that the tip of the probe extends proximate to but not below the lower end of the sheath, the lower end terminating in a rim that is provided with notches, said lower end being tapered, the taper and notches preventing debris collection and bubble formation, said lower end when contacting liquid as it rises will form an airtight cavity defined by the liquid, the interior sheath wall, and the seal, the compression of air in the cavity preventing liquid from further entry into the sheath and contact with the seal. As a result, the liquid cannot deposit a film to form an electrical bridge across the seal.

EP2518413 discloses a steam cooking apparatus with improved water supply and drainage structures. The apparatus includes a body, a cooking compartment, a steam generator to supply steam into the cooking compartment, a water vessel to store water and supply the water into the steam generator, a water supply device including a holder and a slider slidably mounted in the holder so as to be withdrawn from the body, a first water supply tube connecting the slider and the water vessel, a second water supply tube connecting the water vessel and the steam generator, and a drain tube to drain water in the steam generator to the outside of the body. The drain tube includes an end fixed to the slider so that the end of the drain tube is withdrawn with the slider from the body when water in the steam generator is drained to the outside.

EP1837600 discloses a method for monitoring or for open- or closed-loop control of a closed electric heating appliance having a closed heating chamber, in particular of an oven, steamer or tumble-drier, and having a heater and a temperature detector in the heating chamber and having a control device together with means for recording time and for detecting the heating power of the heater, the electric heating appliance or the heater being operated cyclically. The time profile of at least one signal of the temperature detector and the time profile of the heating power are recorded in the control device and the situation in the heating chamber or constituents of gases contained therein is/are determined therefrom, the information obtained in this way being used for monitoring sensors present in the electric heating appliance or for open- or closed-loop control of operation of the electric heating appliance.

The document *"*Low Coolant Sensing Probe with Connector Corrosion Prevention*"* discloses a structure applicable to a probe for use in a non-conducting tank wherein two probe terminals are required and where the fluid in the tank is corrosive to terminals and subject to elevated temperatures and pressures.

EP0399824 discloses an oil level sensor having a cylindrical hollow sensor body and an elongated inner electrode provided in the sensor body at a distance from the inner wall of the sensor body. The sensor body and the inner electrode are made of conductive resin including carbon particles. An oil level detector circuit is provided in the sensor body.

### Summary of invention

The Applicant has realized that the known solutions are not satisfactory for modern technological requirements.

In particular the Applicant has verified that, over time, particles (*e.g.,* limestone particles) carried by water squirts may climb up and accumulate with continuity along the rod, up to the threaded coupling element of the vessel opening. Considering for example limestone particles, a continuous limestone film may form along the rod, up to the threaded coupling element of the vessel opening. As a consequence, due to water squirts and to limestone porosity, water may be absorbed by, and propagate along the limestone film.

This may generate (due to water conductivity) an undesired electrical coupling between the rod and the vessel even when the water level is below the threshold level, thus frustrating water level detection.

Moreover, the Applicant has also found that the above-described known detection assembly, being based on a relatively complex structure, is not easy and cheap to manufacture and to assemble, apart from being prone to manufacturing tolerances.

The Applicant has tackled the problem of devising an improved solution able to overcome the above-discussed, as well as other, drawbacks.

The Applicant has also found that such a solution, although originally conceived for overcoming drawbacks in cooking ovens featuring steam generation systems, may be applied to a wide class of electric appliances that, as performing detection of water (or other fluids) level by electrical conduction, are intrinsically subject to undesired electrical connections, or, generally, to other electrical changes (*e.g.,* conductivity change due to dirty). Moreover, the Applicant has also found that such a solution may be applied to detection of other operative parameters of an electric appliance (*e.g.,* temperature and/or moisture within the cooking chamber of the cooking oven), especially when detection may be impaired by agents deriving from appliance operation (*e.g.,* electromagnetic radiations, or food leftovers).

One or more aspects of the solution according to embodiments of the invention are set out in the independent claims, with advantageous features of the same solution that are indicated in the dependent claims.

An aspect of the present invention relates to a cooking oven. The cooking oven comprises an operative chamber, and a detection assembly for detecting an operative parameter within the operative chamber of the cooking oven. The detection assembly comprises a detection element adapted to be at least partially inserted into said operative chamber for detecting the operative parameter, and a coupling body for supporting the detection element and for mechanically coupling the detection assembly to the operative chamber. Said coupling body comprises a hole into which the detection element is fitted. Said hole comprises a first hole portion having a first size substantially matching the size of the detection element and a second hole portion having a second size greater than the first size, so that, when the detection element is fitted into said hole, a cavity is defined between the detection element and walls of said second hole portion..

According to an embodiment of the present invention, the detection element comprises a sensing portion that, when the detection assembly is coupled to the operative chamber, is exposed to an environment of the operative chamber for detecting the operative parameter. Said sensing portion of the detection element is laterally surrounded by said coupling body and is completely within said cavity.

According to an embodiment of the present invention, the operative chamber is a cooking chamber, and the detection element is a temperature detection element or a moisture level detection element intended to detect the temperature or the moisture level within the cooking chamber.

According to an embodiment of the present invention, the operative chamber is a vessel of a steam generation system of the cooking oven, and the detection element is configured for detecting a water level within the vessel. The detection element comprises a sensing portion extending outside the cavity and intended, when the detection assembly is coupled to the vessel, to come into contact with the water. Said cavity has, in cross-section, a width-to-length ratio intended to prevent agents carried by water squirts from climbing up and accumulating with continuity from said sensing portion to the coupling body through walls of the cavity, and through direct bridging therebetween.

According to an embodiment of the present invention, the operative chamber comprises a chamber opening for receiving a first coupling body portion thereby forming said mechanical coupling between the detection assembly and the operative chamber. Said detection assembly further comprises a second coupling body portion adapted to cover said chamber opening.

According to an embodiment of the present invention, the second coupling body portion is made of a single piece with the first coupling body portion.

According to an embodiment of the present invention, the first coupling body portion comprises, at an outer side wall thereof, a shielding element adapted to provide shielding against water squirts, thus preventing the agents carried by water squirts from accumulating with continuity along the first coupling body portion.

According to an embodiment of the present invention, said shielding element is an annular flange extending substantially orthogonal to the outer side wall of said first coupling body portion.

According to an embodiment of the present invention, said shielding element is made of a resilient material, so as to elastically deform during passage through the chamber opening.

According to an embodiment of the present invention, the first coupling body portion is provided, between a shielding element top and the second coupling body portion, with a recess adapted to accommodate the shielding element when flexing during passage through said chamber opening.

According to an embodiment of the present invention, the coupling body is made of a plastic material.

According to an embodiment of the present invention, the coupling body is over-molded on the detection element.

According to an embodiment of the present invention, the detection element is fitted into said first hole portion by friction.

According to an embodiment of the present invention, the detection assembly comprises a further electrically-conductive detection element.

According to an embodiment of the present invention, the further detection element is configured for detecting the temperature of the detection element so as to infer the amount of agents accumulated thereon.

According to an embodiment of the present invention, the further detection element is electrically insulated from said detection element, and wherein the second coupling body portion comprises a baffle for electrically insulating the further detection element from said detection element.

The present invention allows protecting the detection element from agents deriving from operation of the cooking oven, and potentially impairing detection.

Indeed, considering detection of the water level in a boiler vessel, the present invention allows avoiding undesired electrical coupling between the detection element and the vessel when the water level is below the threshold level, thus making water level detection highly reliable. Considering instead detection of temperature or moisture level within a cooking chamber, the present invention prevents agents deriving from appliance operation (*e.g.,* electromagnetic radiations, or food leftovers) from accumulating on the detection element thereby impairing detection.

Moreover, the present invention, being based on a very simple structure of detection assembly, is easy and cheap to manufacture, apart from being substantially unaffected by manufacturing tolerances.

### Brief description of the annexed drawings

These and other features and advantages of the invention will be made apparent by the following description of some exemplary and non limitative embodiments thereof. For its better intelligibility, the following description should be read making reference to the attached drawings, wherein:
**Figure 1** schematically shows a perspective side view with partly removed parts of a cooking oven according to an embodiment of the invention;
**Figures 2A** and **2B** show a perspective side view and a schematic sectional front view, respectively, of a detection assembly for use in the cooking oven according to an embodiment of the invention;
**Figure 3** shows a schematic sectional front view of a detection assembly for use in the cooking oven according to an embodiment of the invention;
**Figure 4** shows a perspective side view of a detection assembly for use in the cooking oven according to another embodiment of the invention, and
**Figure 5** shows a schematic sectional front view of a detection assembly for use in the cooking oven according to another embodiment of the invention.

### Detailed description of preferred embodiments of the invention

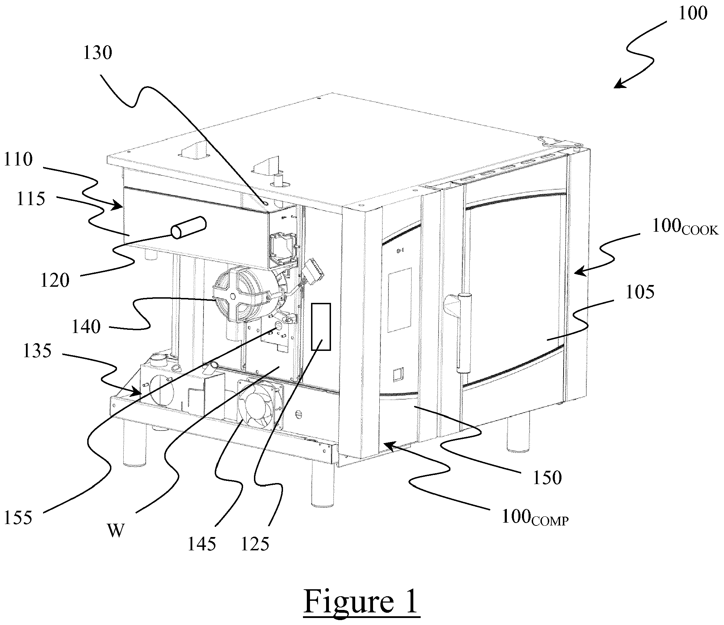

Referring now to the drawings, **Figure 1** schematically shows a perspective side view, with partly removed parts, of a cooking oven **100** according to an embodiment of the invention. In the exemplary embodiment, a freestanding professional cooking oven **100** is disclosed, but the principles of the invention may also be applied to built-in (household or professional) cooking ovens and to freestanding household cooking ovens. The cooking oven **100** may be a steam oven allowing food cooking by steam, or, as herein assumed by way of example only, a combined cooking oven selectively allowing conventional food cooking (*e.g.,* food cooking by heat convention), food cooking by steam, or combinations thereof.

In order to achieve that, the cooking oven **100** comprises a number of well-known electronic, mechanical and/or electro-mechanical components - however, for the sake of description ease and conciseness, only those being relevant for understanding the invention will be introduced and discussed in the following.

The cooking oven **100** comprises a cooking section **100_{COOK}** for food cooking, and, alongside the cooking section **100_{COOK},** a components section **100_{COMP}** for housing some of the components that allow operation of the cooking oven **100** and control of food cooking.

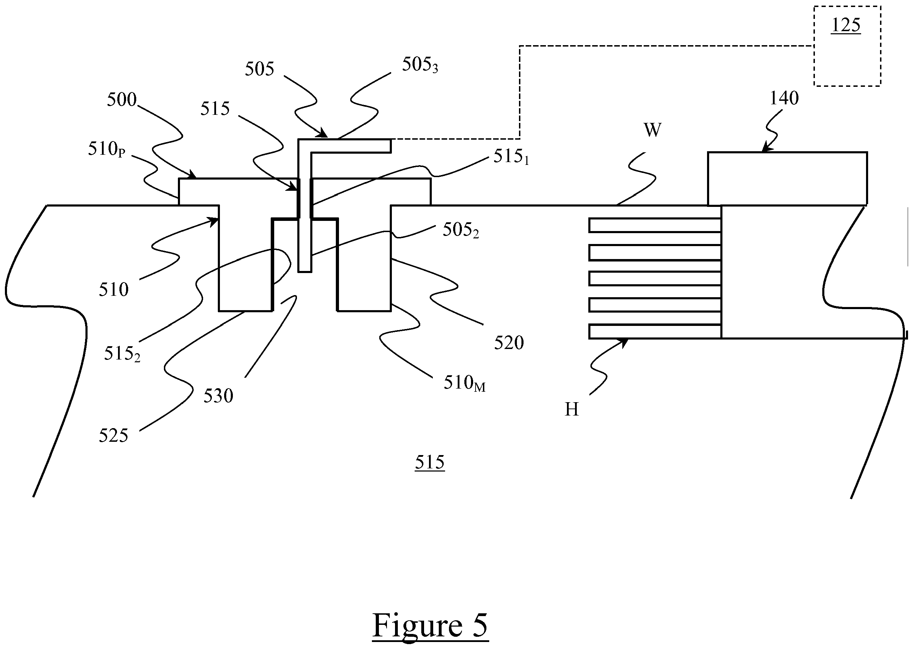

The cooking section **100_{COOK}** comprises a cooking chamber (partly visible only in **Figure 5**) for housing the food to be cooked, and, at a cooking oven front, a door **105** (shown in a closed configuration) for selectively allowing/preventing access to the cooking chamber.

The components section **100_{COMP}** houses, among the other components, a steam generation system **110** for generating cooking steam to be provided to the cooking chamber (as better discussed herebelow).

In the example at issue, the steam generation system **110** comprises a boiler (herebelow, indicated by the same number), although this should not be construed limitatively.

The boiler **110** comprises an electrically conductive (*e.g.,* metal) vessel **115,** (which, for the purposes of the present invention, defines an operative chamber, as described below) adapted to be fed with water, and, within said vessel **115,** a heating element (*e.g.,* an immersion resistor heater), not shown, adapted to be submerged (*i.e.,* totally immersed) by water and to generate steam by water heating (*e.g.,* by heating the water up to at least the boiling point thereof).

The boiler **110** comprises a water input **120** for entrance of water from a water supply (*e.g.,* the water mains), not shown, and a steam outlet (not shown), opening to the cooking chamber, for allowing the generated steam to leave the vessel **115** and to reach the cooking chamber.

A control arrangement **125,** preferably housed in the components section **100_{COMP},** is provided for controlling boiler **110** operation. The control arrangement **125,** illustrated in the figure as a generic block, may be any suitable electronic or electro-mechanic arrangement.

In response to a cooking program cycle, or to a moisture level within the cooking chamber, the control arrangement **125** is configured for activating the boiler **110,** thereby causing it to generate and feed steam into the cooking chamber.

Moreover, upon detection of an insufficient water level within the vessel **115** (*e.g.,* due to steam generation and leaving), the control arrangement **125** is configured for preventing boiler **110** activation (or, if already activated, de-activating the boiler **110**), and for allowing entrance of water into the vessel **115** to restore a sufficient water level.

Entrance of water into the vessel **115** is allowed, at manufacturer discretion, until detection of water level restoration or for a predefined time required to water level restoration. Preferably, valves or other electro-hydraulic devices (not shown), *e.g.* controlled by the control arrangement **125,** are interposed between the water input **120** and the water mains for controlling (*i.e.,* enabling or disenabling) the entrance of water.

According to the disclosed embodiment, entrance of water into the vessel **115** takes place when, due to steam generation and leaving, the water level within it falls below a predefined threshold level indicating that the heating element is not submerged by water any longer (*i.e.,* that the water level within the vessel **115** is/has become insufficient to completely cover/immerse the heating element). This occurrence, as causing a general over-heating of the boiler **110,** should be decidedly avoided, both for reliability issues (*e.g.,* due to degradation of over-temperature sensitive components, such as seals) and for food cooking quality issues (due to the fact that foul-smelling fumes resulting from components degradation may reach the cooking chamber and the food under cooking within it).

The boiler **110** also comprises a vessel opening **130** for receiving a detection assembly, not shown in this figure, that, by cooperation with the control arrangement **125,** allows detection of the water level within the vessel **115.** The vessel opening **130** is preferably provided at a top part of the vessel **115,** so as to receive the detection assembly along a vertical (or substantially vertical, *i.e.* approximately vertical) direction with respect to a water surface. Anyway, nothing prevents from providing the vessel opening **130** at side (and lower) parts of the vessel **115,** so as receive the detection assembly along an inclined direction with respect to the water surface (in which case, the detection assembly may be shaped so as to come into contact with the water along the inclined direction or the vertical direction). Moreover, in the example at issue, the vessel opening **130** is cylindrically-shaped, although this should not be construed limitatively.

For the sake of description completeness, the components section **110_{COMP}** also houses a cooking fumes exhaust system **135** for exhausting the cooking fumes from the cooking chamber outside the cooking oven **100,** a cooking fan **140** for providing forced ventilation of air and, when present, steam within the cooking chamber, and a cooling fan **145** for cooling down the components housed within the components section **110_{COMP}.** Moreover, the components section **110_{COMP}** comprises, *e.g.* at the cooking oven front alongside the door **105,** a control panel **150** for allowing the user to set desired cooking parameters (*e.g.* cooking temperature, cooking time, and/or cooking programs) and displaying cooking information.

Finally, at a wall **W** of the components section **110_{COMP}** adjacent the cooking chamber, one (or more) wall opening **155** is provided that opens into the cooking chamber. As better discussed in the following, such wall opening **155** is configured for receiving a further detection assembly (*e.g.,* for detection of temperature, moisture level or other operative parameters within the cooking chamber).

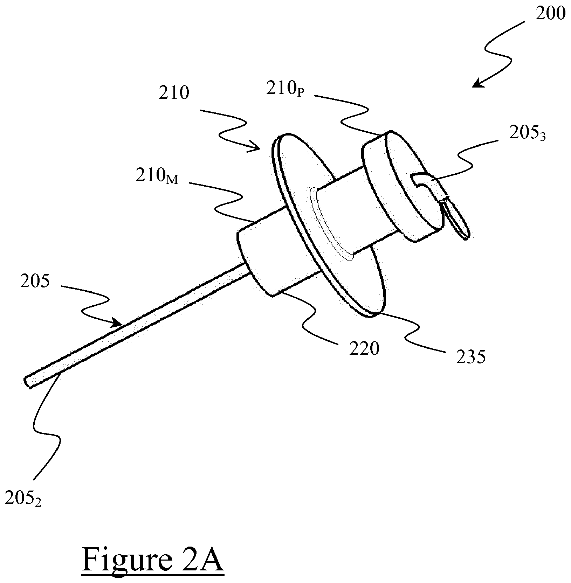

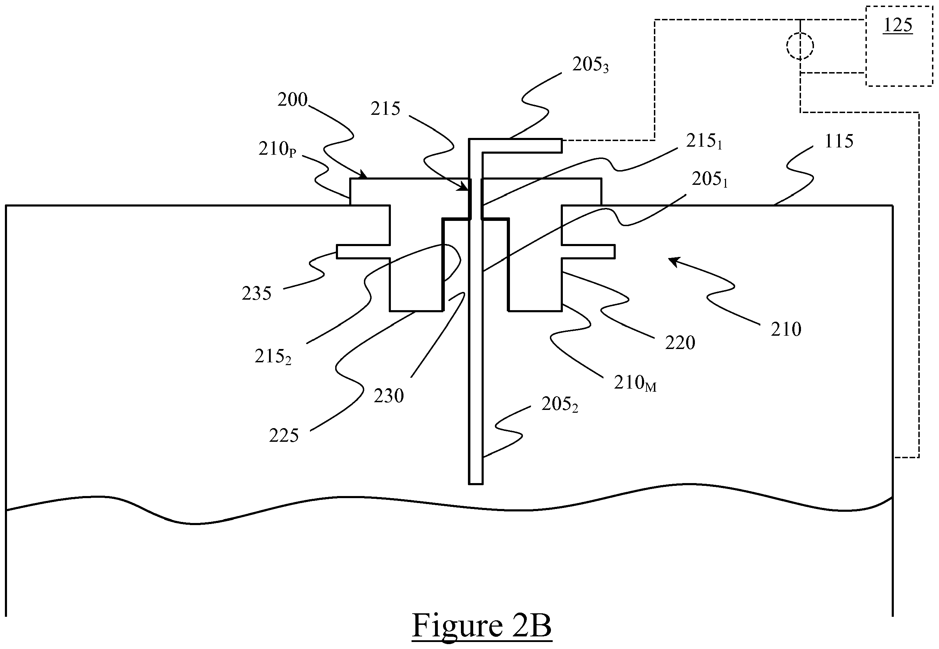

A detection assembly **200** according to an embodiment of the invention is illustrated in the perspective side view and in the schematic sectional front view of **Figures 2A** and **2B****,** respectively (to which reference will be made from now on jointly to **Figure 1**).

The detection assembly **200** comprises a detection element (*e.g.,* an electrically-conductive rod) **205** adapted to be almost completely inserted into the vessel **115** (when the detection assembly **200** is mechanically coupled to the vessel **115**), and a coupling body **210** (mechanically supporting the rod **205**) allowing mechanical coupling of the detection assembly **200** to the vessel **115.**

The coupling body **210** is preferably made of an electrically insulating material, preferably a plastic material, so as to provide, when the detection assembly **200** is coupled to vessel **115,** electrical insulation between it and the rod **205.**

The rod **205** is fitted into the coupling body **210,** preferably (as illustrated) along a central axis thereof.

The rod **205** can be fitted into the coupling body **210** by friction (or, as discussed below, at least partly by friction), *e.g.* through a (pre-formed) inner hole **215** thereof (substantially vertically crossing the whole coupling body **210**). Alternatively, in order to achieve said fitting, over-molding of the coupling body **210** (or of part thereof) on the rod **205** can be performed (with an analogous inner hole **215** that still ensues from over-molding).

As a result of said fitting, the coupling body **210** covers, and completely surrounds, a rod portion **205₁** that, in use, is intended to be substantially astride the vessel **115** (*i.e.,* partly inside the vessel **115,** and partly outside it). Instead, as visible in **Figure 2B** (showing the detection assembly **200** vertically received in the vessel opening **130**), an uncovered rod portion **205₂** that, in use, is intended to be completely inside the vessel **115,** is configured for being at least partially immersed in the water (when a sufficient water level is provided), thus acting as a sensing portion of the rod **205,** whereas an uncovered rod portion **205₃** that, in use, is intended to be completely outside the vessel **115,** allows electrical biasing of the rod **205** (as discussed below).

The coupling body **210** preferably comprises a main portion **210_{M}** for secure insertion thereof (and, hence, of the rod portion **205₂**) into the vessel opening **130,** and, at an end thereof, a plug portion **210_{P}** for effectively covering the vessel opening **130** (and preventing undesired steam outflow through it).

In order to achieve that, the main portion **210_{M}** is preferably shaped and sized so as to substantially match the vessel opening **130.** In the example at issue, thus, the main portion **210_{M}** is cylindrically-shaped. Moreover, the main portion **210_{M}** is preferably designed for exhibiting substantially different resiliency with respect to the vessel **115.**

In the example at issue, the main portion **210_{M}** is advantageously resilient, being for example made of a rubber. Due to different rigidity between rubber (which the main portion **210_{M}** is made of) and metal (which the vessel **115** is made of), good and firm adherence upon contact thereof can be achieved. For example, when the main portion **210_{M},** preferably slightly larger (in cross section) than the vessel opening **130,** is made to slide along the vessel opening **130,** it experiences elastic deformation. This causes highly effective friction and adherence between the main portion **210_{M}** and the vessel **115.** Thus, correct coupling (by frictional insertion) of the detection assembly **200** is easy, reliable and easily reversible.

In the event that the vessel opening **130** incorporates a threaded coupling element (such as in most of old-conception cooking ovens), the detection assembly **200** may comprise an adapting nut (not shown). For example, such an adapting nut may feature a threaded outer wall for screwing into said threaded coupling element, and a smooth inner wall for housing/receiving the main portion **210_{M}.** Alternatively, an outer side wall **220** of the main portion **210_{M}** may be a threaded outer wall (not shown), so as to achieve said coupling by screwing. Additionally or alternatively, an outer lower wall **225** of the main portion **210_{M}** may be shaped so as to achieve effective coupling.

Preferably, the plug portion **210_{P},** *e.g.* cylindrically-shaped as well, is (in cross-section) sufficiently larger than the main portion **210_{M}** to stop further insertion of the detection assembly **200** upon abutting the vessel **115,** and to reliably cover the vessel opening **130.** Preferably, the plug portion **210_{P}** is made of a single piece with the main portion **210_{M},** being for example made of rubber. Due to different rigidity between rubber and metal, good and firm adherence upon contact thereof is experienced, so that the vessel opening **130** is effectively covered by the plug portion **210_{P}** and undesired steam outflow through it is prevented.

Thus, the detection assembly **200,** being based on a very simple structure, is easy and cheap to manufacture and assemble, apart from being substantially unaffected (due to molding and/or over-molding) by manufacturing tolerances.

When, upon insertion of the detection assembly **200,** the water level within the vessel **115** is to be detected, an electric potential difference (low enough to avoid safety and power consumption issues) is provided by means of the control arrangement **125** across the rod **205** (through the rod portion **205₃** thereof) and the vessel **115** (preferably, as conceptually illustrated, through a side thereof).

In this way, by properly designing the length of the rod **205,** when the water level within the vessel **115** is above the threshold level, the rod portion **205₂** is at least partly immersed in (thereby contacting) the water. In such condition, an electrical connection between the rod **205** and the vessel **115** takes place by means of water conductivity (and thus they bring essentially at the same electric potential), indicative of (*i.e.,* interpreted by the control arrangement **125** as) the submersion of the heating member. In response to that, the control arrangement **125** is configured for allowing steam generation by activating the boiler **110** (when cooking steam is required for food cooking) and/or for preventing entrance of water into the vessel **115.**

On the contrary, when the water level is below the threshold level, no electrical connection is experienced between the rod **205** and the vessel **115** (thus, no change in the electric potential difference across them occurs), indicative of (*i.e.,* interpreted by the control arrangement **125** as) a non-submersion of the heating member. In response to that, the control arrangement **125** is configured for preventing steam generation by de-activating the boiler **110** and/or for allowing entrance of water into the vessel **115.**

As visible in **Figure 2B****,** the hole **215,** *e.g.* circular-shaped, comprises a first (*e.g.* upper), hole portion **215₁,** mainly extending substantially in the plug portion **210_{P},** and a second (*e.g.,* lower) hole portion **215₂** mainly extending in the main portion **210_{M}.** Preferably, as illustrated, the upper **215₁** and lower **215₂** hole portions are, in cross-section, substantially coaxial, *e.g.* concentric, and feature different widths.

Advantageously, the width of the upper hole portion **215₁** substantially matches, in cross-section, the width of the rod **205** (so as to allow secure fitting therebetween), whereas the width of the lower hole portion **215₂** is, in cross-section, larger than the width of the upper hole portion **215₁.** Thus, a cavity **230** is defined between the rod portion **205₁** (*i.e.,* that part of the rod portion **205₁** within the lower hole portion **215₂**) and walls of the lower hole portion **215₂** (also denoting cavity **230** walls).

As better discussed herebelow, such a cavity **230** (*i.e.,* a width-to-length ratio thereof) is designed so as to prevent limestone (as well as other particles/agents) carried by water squirts from climbing up and accumulating with continuity (*i.e.,* forming a continuous limestone film) from the rod portion **205₂** to the vessel **115** (along the rod portion **205₁,** the cavity **230** walls and/or the outer lower **225** and side **220** walls of the main portion **210_{M}**), thus avoiding undesired electrical coupling between the rod **205** and the vessel **115** when the water level is below the threshold level (and water squirts are absorbed by, and propagate along, the limestone film).

Specifically, by setting the width of the lower hole portion **215₂** sufficiently small, the amount of randomly-directed water squirts intercepted by (*i.e.,* able to enter) the cavity **230** is low. Moreover, by setting a length (or height, when the detection assembly **200** is vertically coupled to the vessel **115**) of the lower hole portion **215₂** sufficiently long with respect to the width thereof, the water squirts still entering the cavity **230** experience multiple "reflections", which strongly deadens their climbing up along the rod portion **205₁** and the cavity **230** walls. Thus, no undesired conductive path is formed by continuous limestone accumulation from the rod portion **205₂** to the outer lower **225** and side **220** walls (and, hence, to the vessel **115**) through the rod portion **205₁** and the cavity **230** walls.

On the other hand, by setting the width of the lower hole portion **215₂** sufficiently large with respect to the width of the upper hole portion **215₁,** limestone unavoidably accumulating with continuity along the rod portion **205₂** is prevented from bridging to the limestone unavoidably accumulating with continuity from the outer lower **225** and side **220** walls of the main portion **210_{M}** to the vessel **115,** thus avoiding undesired electrical coupling between the rod **205** and the vessel **115** when the water level is below the threshold level. In other words, by setting the width of the lower hole portion **215₂** sufficiently large with respect to the width of the upper hole portion **215₁,** limestone is prevented from accumulating with continuity by "bridging" from the rod portion **205₂** to the outer lower wall **225** of the main portion **210_{M}.**

Advantageously, at least part of the rod **205** (preferably, at least part of the rod portion **205₂**) is coated by a sheath (not shown) made up of a material having adhesion-preventing properties against limestone.

Additionally or alternatively, the detection assembly **200** further comprises, at the main portion **210_{M},** a shielding element **235** adapted to prevent water squirts (and limestone carried by it) from climbing up along the outer side wall **220** of the main portion **210_{M},** beyond the shielding element **235** itself.

Specifically, by setting the width (in cross-section) of the shielding element **235** sufficiently larger than the width of the main portion **210_{M},** the amount of randomly-directed water squirts intercepted by (and prevented from passing beyond) the shielding element **235** is high, thus further preventing limestone from accumulating with continuity along the outer side wall **220.**

Preferably, the shielding element **235** is made of a single piece with the coupling body **210** (or with the main portion **210_{M}** thereof, in the event that the plug portion **210_{P}** is separate from it). Even more preferably, as visible in the figures, the shielding element **235** is an outer circular flange of the main portion **210_{M}** extending substantially orthogonal to the outer side wall **220** thereof.

Advantageously, the shielding element **235** is made of a resilient material, so as to flex, *i.e.* elastically bend (and pass through the vessel opening **130**) during coupling of the detection assembly **200** to the vessel **115.**

Thanks to resiliency, the shielding element **235** also elastically compresses when passing through the vessel opening **130.** By virtue of said flexing and compressing of the shielding element **235,** no further effort is required for coupling the detection assembly **200** to the vessel **115.**

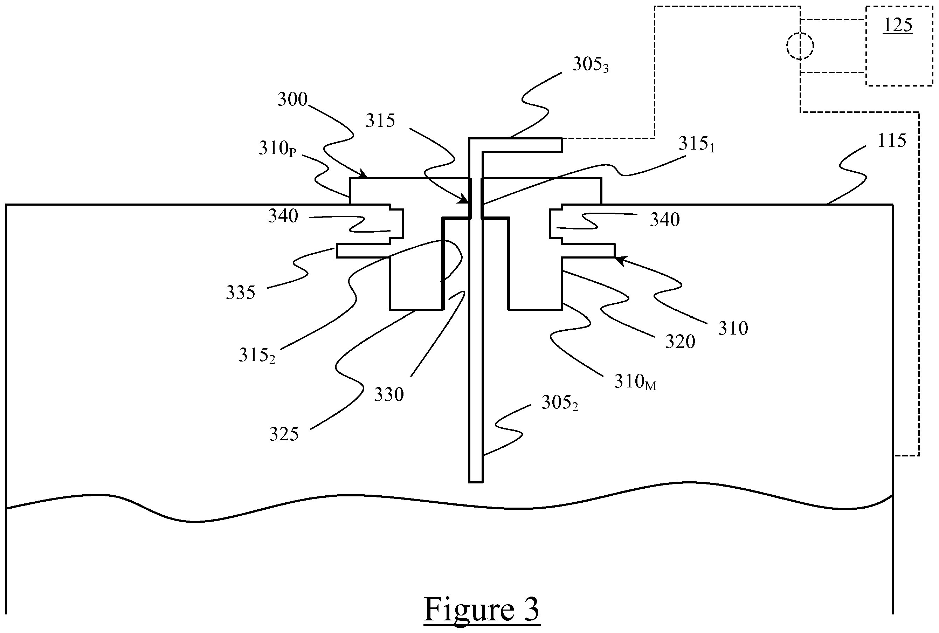

Additionally or alternatively, a main portion shaped so as to substantially compensate its width increase when the shielding element is flexed may be advantageously provided, as illustrated in the schematic sectional front view (similar to that of **Figure 2B**) of the detection assembly **300** of **Figure 3** (wherein elements corresponding to those discussed in connection with **Figures 2A** and **2B** will be denoted by equal or similar references, and their explanation will not repeated for the sake of brevity).

As visible in such figure, the main portion **310_{M},** substantially cylindrically-shaped, is provided, between the shielding element **335** top and the plug portion **310_{P},** with a recess **340** adapted to accommodate the shielding element **335** when flexed. Preferably, the recess **340** is circular in shape, so as to substantially match the circular shape of the shielding element **335.** Even more preferably, the recess **340** has a depth at least equal to (or greater than) the thickness of the shielding element **335,** so as to allow complete accommodation - anyway, implementations wherein the depth of the recess **340** is lower than the thickness of the shielding element **335** are not excluded (so as to allow partial accommodation).

Thanks to the detection assembly **300,** the shielding element **335** is allowed to pass, when flexed, through the vessel opening **130** without excessive efforts, even when (*e.g.,* due to manufacturing tolerances) passage of the main portion **310_{M}** through the vessel opening **130** is difficult.

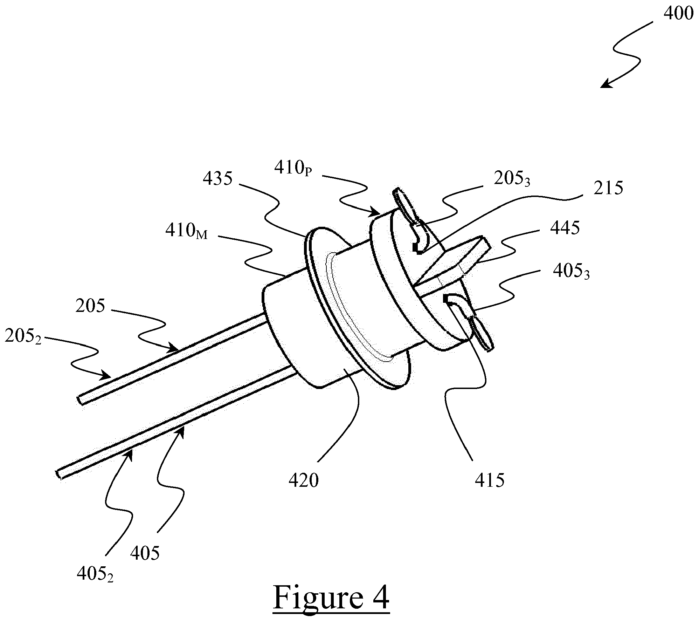

**Figure 4** shows a perspective side view of a detection assembly **400** for use in the cooking oven **100** according to another embodiment of the invention.

The detection assembly **400** is conceptually equivalent to the detection assembly **200** (reason why, corresponding elements will be denoted by equal or similar references, and their explanation will not repeated for the sake of brevity), but comprises, in addition to the latter, a further detection element **405** (*e.g.,* a further electrically-conductive rod, analogous to the rod **205**).

The coupling body **410** is provided with the hole **215,** and with a further hole **415** for fitting the rod **205** and the rod **405** thereinto, respectively. As discussed above, the coupling body **410** can be over-molded on both rods **205,405,** or the rod **405** can be fitted into the hole **415** (or a portion thereof) by friction.

Although not shown, the hole **415** may comprise upper and lower hole portions (analogous to the upper **215₁** and lower **215₂** hole portions of the hole **215**), or the holes **215** and **415** may share a same lower hole portion (*i.e.,* a same lower hole portion, *e.g.* larger than the lower hole portion **215₂,** may "house" both the rod **205** and the rod **405),** and have different upper hole portions (so as to allow electrical insulation between the rods **205** and **405).** Alternatively, the holes **415** may consist of a single straight portion for fitting the rod **405** thereinto (so that no cavity is associated with the rod **405).**

As discussed above, the main portion **410_{M}** may be provided, between the shielding element **435** top and plug portion **410_{P},** with a recess (not shown) adapted to accommodate the shielding element **435** when flexing during passage through the vessel opening **130.**

As discussed below for some exemplary, not limiting, embodiments, shape, size and materials of the rods **205,405** may be chosen according to specific implementations of the detection assembly **400.**

For example, the rod **405** may provide a further water-level detection, so as to have redundancy. In this case, shape, size and materials of the rods **205,405** may advantageously be same. Anyway, nothing prevents from providing different shape, size or materials, so as to have reciprocally "uncorrelated" detections. For example, by providing the rod portions **205₂,405₂** with reciprocally different lengths, two different water levels can be detected.

Alternatively, the rod **405** may implement a temperature detection device, being for example a thermocouple. In the latter case, the plug portion **410_{P}** of the detection assembly **400** preferably comprises, on a top thereof, a baffle **445** for insulating the rod portions **205₃,405₃** from each other (so as to electrically control them in an independent way). A thermocouple may be used for detecting the temperature within the vessel **115,** or, advantageously, the temperature of the rod **205.** In the latter case, the control arrangement **125,** according to the detected temperature, may be configured for determining, in a known manner, the amount of limestone accumulated along the rod **205.** Thereafter, upon determining that an excessive amount of limestone has accumulated along the rod **205,** the control arrangement **125** may be configured for displaying an error code, and/or for enabling descaling operations (*e.g.,* feeding limestone descaling agents into the vessel **115).**

Although the proposed solution has been described with a certain degree of detail by making explicit reference to a detection assembly intended for use in association with a boiler vessel for detecting the water level within it, this should not be construed limitatively. Indeed, the basic principles of the proposed detection assembly may be applied for detection of other operative parameters (*i.e.,* operative parameters different from water level) and/or in association to other operative chambers of the cooking oven **100** (*i.e.,* not necessarily the boiler vessel), or of other household/professional appliances.

In this respect, reference will be now made to **Figure 5****,** which shows, according to another embodiment of the invention, a perspective side view of a detection assembly **500,** associated to the cooking chamber **515** of the cooking oven **100.**

The detection assembly **500** is preferably received in the wall opening **155** provided at the wall **W** of the components section **100_{COMP}** adjacent the cooking chamber **515.** As visible in the figure (which is not drawn to scale), the cooking chamber **515** preferably houses, along the wall **W** and around the cooking fan **140,** heating elements **H** for providing food cooking by heating.

The detection assembly **500** is conceptually equivalent to the detection assembly **200** (reason why, corresponding elements will be denoted by equal or similar references, and their explanation will not repeated for the sake of brevity). The detection element **505** may for example be adapted to detect a temperature within the cooking chamber **515** of the cooking oven **100,** being for example a thermocouple.

Alternatively, the detection element **505** is configured for detecting a moisture level within the cooking chamber **515** of the cooking oven **100,** being for example a moisture-level sensor (for example, a ceramic moisture-level sensor, such as a lambda sensor).

In both cases, the cavity **530** laterally surrounds the (sensing) rod portion **505₂** of the detection element **505,** so as to prevent it from being directly invested by electromagnetic radiation radiated by the heating element **H,** or by food leftovers originating during food cooking. In other words, the main body **510_{M}** of the coupling body **510** shields the rod portion **505₂.**

Naturally, in order to satisfy local and specific requirements, a person skilled in the art may apply to the solution described above many logical and/or physical modifications and alterations. More specifically, although the present invention has been described with a certain degree of particularity with reference to preferred embodiments thereof, it should be understood that various omissions, substitutions and changes in the form and details as well as other embodiments are possible. In particular, different embodiments of the invention may even be practiced without the specific details (such as the numeric examples) set forth in the preceding description for providing a more thorough understanding thereof; on the contrary, well known features may have been omitted or simplified in order not to obscure the description with unnecessary particulars. Moreover, it is expressly intended that specific elements and/or method steps described in connection with any disclosed embodiment of the invention may be incorporated in any other embodiment as a matter of general design choice.

## Claims

1. Cooking oven **(100)** comprising:
an operative chamber **(115;515),**
a detection assembly **(200;300;400;500)** for detecting an operative parameter within the operative chamber **(115;515)** of the cooking oven **(100),** the detection assembly **(200;300;400;500)** comprising:
a detection element **(205;305;505)** adapted to be at least partially inserted into said operative chamber **(115;515)** for detecting the operative parameter, and
a coupling body **(210;310;410;510)** for supporting the detection element **(205;305;505)** and for mechanically coupling the detection assembly **(200;300;400;500)** to the operative chamber **(115;515),** said coupling body **(210;310;410;510)** comprising a hole **(215;315;515)** into which the detection element **(205;305;505)** is fitted,
**characterized in that**
said hole **(215;315;515)** comprises a first hole portion **(215₁;315₁;515₁)** having a first size substantially matching the size of the detection element **(205;305;505)** and a second hole portion **(215₂;315₂;515₂)** having a second size greater than the first size, so that, when the detection element **(205;305;505)** is fitted into said hole **(215;315;515),** a cavity **(230;330;530)** is defined between the detection element **(205;305;505)** and walls of said second hole portion **(215₂;315₂;515₂).**

2. Cooking oven **(100)** according to Claim 1, wherein the detection element **(505)** comprises a sensing portion **(505₂)** that, when the detection assembly **(500)** is coupled to the operative chamber **(515),** is exposed to an environment of the operative chamber **(515)** for detecting the operative parameter, and wherein said sensing portion **(505₂)** of the detection element **(505)** is laterally surrounded by said coupling body **(510)** and is completely within said cavity **(530).**

3. Cooking oven **(100)** according to Claim 1 or 2, wherein the operative chamber **(515)** is a cooking chamber **(515),** and wherein the detection element **(505)** is a temperature detection element or a moisture level detection element intended to detect the temperature or the moisture level within the cooking chamber **(515).**

4. Cooking oven **(100)** according to Claim 1, wherein
the operative chamber **(115)** is a vessel **(115)** of a steam generation system **(110)** of the cooking oven **(100),** and
the detection element **(205;305)** is configured for detecting a water level within the vessel **(115),** the detection element **(205;305)** comprising a sensing portion **(205₂;305₂)** extending outside the cavity **(230;330)** and intended, when the detection assembly **(200;300;400)** is coupled to the vessel **(115),** to come into contact with the water.

5. Cooking oven **(100)** according to any of the preceding Claims, wherein the operative chamber **(115;515)** comprises a chamber opening **(130;155)** for receiving a first coupling body portion **(210_{M};310_{M};410_{M};510_{M})** thereby forming said mechanical coupling between the detection assembly **(200;300;400;500)** and the operative chamber **(115;515),** said detection assembly **(200;300;400;500)** further comprising a second coupling body portion **(210p;310p;410p;510p)** adapted to cover said chamber opening **(130;155).**

6. Cooking oven **(100)** according to Claim 5, wherein the second coupling body portion **(210_{P};310_{P};410_{P};510_{P})** is made of a single piece with the first coupling body portion **(210_{M};310_{M};410_{M};510_{M}).**

7. Cooking oven **(100)** according to Claim 5 or 6, wherein the first coupling body portion **(210_{M};310_{M};410_{M})** comprises, at an outer side wall thereof, a shielding element **(235;335;435)** adapted to provide shielding against water squirts, thus preventing the agents carried by water squirts from accumulating with continuity along the first coupling body portion **(210_{M};310_{M};410_{M}).**

8. Cooking oven **(100)** according to Claim 7, wherein said shielding element **(235;335;435)** is an annular flange extending substantially orthogonal to the outer side wall **(220;320;420)** of said first coupling body portion **(210_{M};310_{M};410_{M}).**

9. Cooking oven **(100)** according to Claim 7 or 8, wherein said shielding element **(235;335;435)** is made of a resilient material, so as to elastically deform during passage through the chamber opening **(130).**

10. Cooking oven **(100)** according to Claim 9, wherein the first coupling body portion **(310_{M})** is provided, between a shielding element **(335)** top and the second coupling body portion **(310_{P}),** with a recess **(340)** adapted to accommodate the shielding element **(335)** when flexing during passage through said chamber opening **(130).**

11. Cooking oven **(100)** according to any of the preceding Claims, wherein the coupling body **(210;310;410;510)** is made of a plastic material.

12. Cooking oven **(100)** according to any of the preceding Claims, wherein the coupling body **(210;310;410;510)** is over-molded on the detection element **(205;305;505).**

13. Cooking oven **(100)** according to any Claim from 1 to 12, wherein the detection element **(205;305;505)** is fitted into said first hole portion **(215₁,315₁;515₁)** by friction.

14. Cooking oven **(100)** according to any claim from 4 to 13, wherein the detection assembly **(400)** comprises a further electrically-conductive detection element **(405).**

15. Cooking oven **(100)** according to Claim 14, wherein the further detection element **(405)** is configured for detecting the temperature of the detection element **(205,305)** so as to infer the amount of agents accumulated thereon.

16. Cooking oven **(100)** according to Claim 14 or 15, wherein the further detection element **(405)** is electrically insulated from said detection element **(205,305),** and wherein the second coupling body portion **(410_{P})** comprises a baffle **(445)** for electrically insulating the further detection element **(405)** from said detection element **(205,305).**

## Patentansprüche

1. Kochofen **(100),** umfassend:
eine Betriebskammer **(115; 515),**
eine Detektierungsanordnung **(200; 300; 400; 500)** zum Detektieren eines Betriebsparameters innerhalb der Betriebskammer **(115; 515)** des Kochofens **(100),** wobei die Detektierungsanordnung **(200; 300; 400; 500)** umfasst:
ein Detektierungselement **(205; 305; 505),** das vorgesehen ist, um mindestens teilweise in die Betriebskammer **(115; 515)** eingeführt zu werden, um den Betriebsparameter zu detektieren, und
einen Kopplungskörper **(210; 310; 410; 510)** zum Halten des Detektierungselements **(205; 305; 505)** und zum mechanischen Koppeln der Detektierungsanordnung **(200; 300; 400; 500)** an die Betriebskammer **(115; 515),** wobei der Kopplungskörper **(210; 310; 410; 510)** ein Loch **(215; 315; 515)** umfasst, in welches das Detektierungselement **(205; 305; 505)** eingepasst wird,
**dadurch gekennzeichnet, dass**
das Loch **(215; 315; 515)** einen ersten Lochabschnitt **(215₁; 315₁; 515₁)** mit einer ersten Größe, die im Wesentlichen zu der Größe des Detektierungselements **(205; 305; 505)** passt, und einen zweiten Lochabschnitt **(215₂; 315₂; 515₂)** mit einer zweiten Größe umfasst, die größer als die erste Größe ist, so dass, wenn das Detektierungselement **(205; 305; 505)** in das Loch **(215; 315; 515)** eingepasst wird, ein Hohlraum **(230, 330, 530)** zwischen dem Detektierungselement **(205; 305; 505)** und Wänden des zweiten Lochabschnitts **(215₂; 315₂; 515₂)** definiert wird.

2. Kochofen **(100)** nach Anspruch 1, wobei das Detektierungselement **(505)** einen Abfühlabschnitt **(505₂)** umfasst, der, wenn die Detektierungsanordnung **(500)** an die Betriebskammer **(515)** gekoppelt wird, einer Umgebung der Betriebskammer **(515)** ausgesetzt ist, um die Betriebsparameter zu detektieren, und wobei der Abfühlabschnitt **(505₂)** des Detektierungselement **(505)** seitlich von dem Kopplungskörper **(510)** umgeben ist und sich vollständig innerhalb des Hohlraums **(530)** befindet.

3. Kochofen **(100)** nach Anspruch 1 oder 2, wobei die Betriebskammer **(515)** eine Kochkammer **(515)** ist, und wobei das Detektierungselement **(505)** ein Temperaturdetektierungselement oder ein Feuchtigkeitspegeldetektierungselement ist, das vorgesehen ist, um die Temperatur oder den Feuchtigkeitspegel in der Kochkammer **(515)** zu detektieren.

4. Kochofen **(100)** nach Anspruch 1, wobei die Betriebskammer **(115)** ein Kessel **(115)** eines Dampferzeugungssystems **(110)** des Kochofens **(100)** ist, und
das Detektierungselement **(205; 305)** ausgestaltet ist, um einen Wasserpegel innerhalb des Kessels **(115)** zu detektieren, wobei das Detektierungselement **(205; 305)** einen Abfühlabschnitt **(205₂; 305₂)** umfasst, der sich außerhalb des Hohlraums **(230; 330)** erstreckt und in Kontakt mit dem Wasser kommen soll, wenn die Detektierungsanordnung **(200; 300; 400)** an den Kessel **(115)** gekoppelt wird.

5. Kochofen **(100)** nach einem der vorhergehenden Ansprüche, wobei die Betriebskammer **(115; 515)** eine Kammeröffnung **(130; 155)** umfasst, um einen ersten Kopplungskörperabschnitt **(210_{M}; 310_{M}; 410_{M}; 510_{M})** aufzunehmen, wodurch die mechanische Kopplung zwischen der Detektierungsanordnung **(200; 300; 400; 500)** und der Betriebskammer **(115; 515)** gebildet wird, wobei die Detektierungsanordnung **(200; 300; 400; 500)** ferner einen zweiten Kopplungskörperabschnitt **(210_{P}; 310_{P}; 410_{P}; 510_{P})** umfasst, der vorgesehen ist, um die Kammeröffnung **(130; 155)** zu bedecken.

6. Kochofen **(100)** nach Anspruch 5, wobei der zweite Kopplungskörperabschnitt **(210_{P}; 310_{P}; 410_{P}; 510_{P})** einstückig mit dem ersten Kopplungskörperabschnitt **(210_{M}; 310_{M}; 410_{M}; 510_{M})** gefertigt ist.

7. Kochofen **(100)** nach Anspruch 5 oder 6, wobei der erste Kopplungskörperabschnitt **(210_{M}; 310_{M}; 410_{M})** an seiner Außenseitenwand ein Schutzelement **(235; 335; 435)** umfasst, das vorgesehen ist, um Schutz vor Wasserspritzer bereitzustellen, wodurch verhindert wird, dass die wasserspritzergetragenen Substanzen sich kontinuierlich entlang des ersten Kopplungskörperabschnitts **(210_{M}; 310_{M}; 410_{M})** ansammeln.

8. Kochofen **(100)** nach Anspruch 7, wobei das Schutzelement **(235; 335; 435)** ein ringförmiger Flansch ist, der sich im Wesentlichen senkrecht zu der Außenseitenwand **(220; 320; 420)** des ersten Kopplungskörperabschnitts **(210_{M}; 310_{M}; 410_{M})** erstreckt.

9. Kochofen **(100)** nach Anspruch 7 oder 8, wobei das Schutzelement **(235; 335; 435)** aus einem federnden Material gefertigt ist, um sich während des Durchgangs durch die Kammeröffnung **(130)** hindurch elastisch zu verformen.

10. Kochofen **(100)** nach Anspruch 9, wobei der erste Kopplungskörperabschnitt **(310_{M})** zwischen einem Schutzelement **(335)** oben und dem zweiten Kopplungskörperabschnitt **(310_{P})** bereitgestellt wird, mit einer Aussparung **(340),** die vorgesehen ist, um das Schutzelement **(335)** unterzubringen, wenn es während des Durchgangs durch die Kammeröffnung **(130)** hindurch gebogen wird.

11. Kochofen **(100)** nach einem der vorhergehenden Ansprüche, wobei der Kopplungskörper **(210; 310; 410; 510)** aus einem Kunststoffmaterial gefertigt ist.

12. Kochofen **(100)** nach einem der vorhergehenden Ansprüche, wobei der Kopplungskörper **(210; 310; 410; 510)** auf dem Detektierungselement **(205; 305; 505)** umspritzt ist.

13. Kochofen **(100)** nach einem der Ansprüche 1 bis 12, wobei das Detektierungselement **(205; 305; 505)** durch Reibung in den ersten Lochabschnitt **(215₁, 315₁; 515₁)** eingepasst wird.

14. Kochofen **(100)** nach einem der Ansprüche 4 bis 13, wobei die Detektierungsanordnung **(400)** ein weiteres elektrisch leitendes Detektierungselement **(405)** umfasst.

15. Kochofen **(100)** nach Anspruch 14, wobei das weitere Detektierungselement **(405)** ausgestaltet ist, um die Temperatur des Detektierungselements **(205, 305)** zu detektieren, um daraus die Menge an darauf angesammelten Substanzen zu folgern.

16. Kochofen **(100)** nach Anspruch 14 oder 15, wobei das weitere Detektierungselement **(405)** von dem Detektierungselement **(205, 305)** elektrisch isoliert ist, und wobei der zweite Kopplungskörperabschnitt **(410_{P})** einen Prallkörper **(445)** zum elektrischen Isolieren des weiteren Detektierungselements **(405)** von dem Detektierungselement **(205, 305)** umfasst.

## Revendications

1. Four de cuisson (100), comprenant :
une chambre fonctionnelle (115, 515) ;
un ensemble de détection (200, 300, 400, 500) permettant de détecter un paramètre fonctionnel dans la chambre fonctionnelle (115, 515) du four de cuisson (100), l'ensemble de détection (200, 300, 400, 500) comprenant :
un élément de détection (205, 305, 505) conçu pour être, au moins en partie, inséré dans ladite chambre fonctionnelle (115, 515) pour détecter le paramètre fonctionnel ; et
un corps d'accouplement (210, 310, 410, 510) permettant de supporter l'élément de détection (205, 305, 505) et d'accoupler mécaniquement l'ensemble de détection (200, 300, 400, 500) à la chambre fonctionnelle (115, 515), ledit corps d'accouplement (210, 310, 410, 510) comprenant un orifice (215, 315, 515) dans lequel l'élément de détection (205, 305, 505) est ajusté,
**caractérisé en ce que** :
ledit orifice (215, 315, 515) comprend une première partie d'orifice (215₁, 315₁, 515₁) ayant une première taille correspondant sensiblement à la taille de l'élément de détection (205, 305, 505), et une seconde partie d'orifice (215₂, 315₂, 515₂) ayant une seconde taille supérieure à la première taille, de sorte que, quand l'élément de détection (205, 305, 505) est ajusté dans ledit orifice (215, 315, 515), une cavité (230, 330, 530) est définie entre l'élément de détection (205, 305, 505) et des parois de ladite seconde partie d'orifice (215₂, 315₂, 515₂).

2. Four de cuisson (100) selon la revendication 1, dans lequel l'élément de détection (505) comprend une partie de détection (505₂) qui, quand l'ensemble de détection (500) est accouplé à la chambre fonctionnelle (515), est exposée à un environnement de la chambre fonctionnelle (515) pour détecter le paramètre fonctionnel, et
dans lequel ladite partie de détection (505₂) de l'élément de détection (505) est entourée latéralement par ledit corps d'accouplement (510) et est entièrement située dans ladite cavité (530).

3. Four de cuisson (100) selon la revendication 1 ou 2, dans lequel la chambre fonctionnelle (515) est une chambre de cuisson (515), et
dans lequel l'élément de détection (505) est un élément de détection de température ou un élément de détection de niveau d'humidité destiné à détecter la température ou le niveau d'humidité dans la chambre de cuisson (515).

4. Four de cuisson (100) selon la revendication 1, dans lequel la chambre fonctionnelle (115) est une cuve (115) d'un système de génération de vapeur (110) du four de cuisson (100), et
l'élément de détection (205, 305) est configuré pour détecter un niveau d'eau dans la cuve (115), l'élément de détection (205, 305) comprenant une partie de détection (205₂, 305₂) s'étendant à l'extérieur de la cavité (230, 330) et destinée, quand l'ensemble de détection (200, 300, 400) est accouplé à la cuve (115), à venir en contact avec l'eau.

5. Four de cuisson (100) selon l'une quelconque des revendications précédentes, dans lequel la chambre fonctionnelle (115, 515) comprend une ouverture de chambre (130, 155) pour recevoir une première partie de corps d'accouplement (210_{M}, 310_{M}, 410_{M}, 510_{M}) de manière à former ledit accouplement mécanique entre l'ensemble de détection (200, 300, 400, 500) et la chambre fonctionnelle (115, 515), ledit ensemble de détection (200, 300, 400, 500) comprenant en outre une seconde partie de corps d'accouplement (210ₚ, 310ₚ, 410ₚ, 510ₚ) conçue pour couvrir ladite ouverture de chambre (130, 155).

6. Four de cuisson (100) selon la revendication 5, dans lequel la seconde partie de corps d'accouplement (210ₚ, 310ₚ, 410ₚ, 510ₚ) est constituée d'une seule pièce avec la première partie de corps d'accouplement (210_{M}, 310_{M}, 410_{M}, 510_{M}).

7. Four de cuisson (100) selon la revendication 5 ou 6, dans lequel la première partie de corps d'accouplement (210_{M}, 310_{M}, 410_{M}) comprend, au niveau d'une paroi latérale extérieure correspondante, un élément de blindage (235, 335, 435) conçu pour assurer un blindage contre des jets d'eau, de manière à empêcher les agents transportés par les jets d'eau de s'accumuler en continuité le long de la première partie de corps d'accouplement (210_{M}, 310_{M}, 410_{M}).

8. Four de cuisson (100) selon la revendication 7, dans lequel ledit élément de blindage (235, 335, 435) est un rebord annulaire s'étendant sensiblement orthogonalement à la paroi latérale extérieure (220, 320, 420) de ladite première partie de corps d'accouplement (210_{M}, 310_{M}, 410_{M}).

9. Four de cuisson (100) selon la revendication 7 ou 8, dans lequel ledit élément de blindage (235, 335, 435) est constitué d'un matériau résilient, de manière à pouvoir se déformer à son passage dans l'ouverture de chambre (130).

10. Four de cuisson (100) selon la revendication 9, dans lequel la première partie de corps d'accouplement (310_{M}) est munie, entre un dessus d'élément de blindage (335) et la seconde partie de corps d'accouplement (310ₚ), d'un évidement (340) conçu pour recevoir l'élément de blindage (335) lors de sa flexion à son passage dans ladite ouverture de chambre (130).

11. Four de cuisson (100) selon l'une quelconque des revendications précédentes, dans lequel le corps d'accouplement (210, 310, 410, 510) est constitué d'un matériau plastique.

12. Four de cuisson (100) selon l'une quelconque des revendications précédentes, dans lequel le corps d'accouplement (210, 310, 410, 510) est surmoulé sur l'élément de détection (205, 305, 505).

13. Four de cuisson (100) selon l'une quelconque des revendications 1 à 12, dans lequel l'élément de détection (205, 305, 505) est ajusté dans ladite première partie d'orifice (215₁, 315₁, 515₁) avec serrage.

14. Four de cuisson (100) selon l'une quelconque des revendications 4 à 13, dans lequel l'ensemble de détection (400) comprend un autre élément de détection électroconducteur (405).

15. Four de cuisson (100) selon la revendication 14, dans lequel l'autre élément de détection (405) est configuré pour détecter la température de l'élément de détection (205, 305) de manière à déduire la quantité d'agents qui y sont accumulés.

16. Four de cuisson (100) selon la revendication 14 ou 15, dans lequel l'autre élément de détection (405) est isolé électriquement dudit élément de détection (205, 305), et
dans lequel la seconde partie de corps d'accouplement (410ₚ) comprend un déflecteur (445) pour isoler électriquement l'autre élément de détection (405) dudit élément de détection (205, 305).
